# EUROPÄISCHE PATENTANMELDUNG

(11) **EP 4 525 102 A1**
(43) Veröffentlichungstag der Anmeldung: **19.03.2025**
(21) Anmeldenummer: 24199896.2
(22) Anmeldetag: 12.09.2024
(51) Int. Cl.: H01M 8/0228, H01M 8/0267, H01M 8/04007, H01M 8/0206, H01M 8/0213, H01M 8/0217, H01M 8/0221

(54) **BIPOLARPLATTE MIT OBERFLÄCHENBEHANDELTEN STRÖMUNGSKANÄLEN**

(30) Priorität: 13.09.2023 DE 102023124675
(71) Anmelder: Aerostack GmbH, 72581 Dettingen an der Erms (DE)
(72) Erfinder: SCHUDY, Markus, 72581 Dettingen an der Erms (DE); BUNTZ, Marcus-Benedict, 72581 Dettingen an der Erms (DE); ZIEGLER, Christoph, 72581 Dettingen an der Erms (DE)
(74) Vertreter: LKGLOBAL Lorenz & Kopf Patentanwalt Attorney at Law PartG mbB

(57) **Zusammenfassung**

Es ist eine Bipolarplatte (10) und ein Brennstoffzellensystem (100), für eine Brennstoffzelle mit einem Zwei-Phasen-Kühlsystem angegeben, aufweisend:
einen Kühlmitteleinlass (12),
einen Kühlmittelauslass (14),
eine Vielzahl von Kühlmittelkanälen (16),
wobei der Kühlmitteleinlass (12) über die Vielzahl von Kühlmittelkanälen (16) mit dem Kühlmittelauslass (14) in Fluidverbindung steht,
wobei mindestens eine Innenfläche von Kühlmitteleinlass (12), Kühlmittelauslass (14) und mindestens einem der Vielzahl von Kühlmittelkanälen (16) eine Oberflächenbehandlung aufweist um einen Strömungsverlauf einer Kühlflüssigkeit entlang mindestens einen Innenfläche und/oder einen Phasenübergang der Kühlflüssigkeit zu beeinflussen.

## Beschreibung

### Gebiet der Erfindung

Die vorliegende Beschreibung betrifft allgemein das technische Gebiet der Luftfahrt. Insbesondere betrifft die Beschreibung eine Bipolarplatte mit oberflächenbehandelten Strömungskanälen sowie ein Brennstoffzellensystem mit einer derartigen Bipolarplatte.

### Hintergrund der Erfindung

Brennstoffzellen stellen eine mögliche Lösung für den emissionsfreien Antrieb von beispielsweise Flugzeugen dar. Polymer-Elektrolyt-Brennstoffzellen-Stapel (PEMFC) erzeugen Strom und Elektrizität durch elektrochemische Reaktion von Wasserstoff und Sauerstoff zu Wasser. Bei dieser Reaktion entsteht Wärme, die abgeführt werden muss. In kommerziellen Brennstoffzellen-Stapeln wird dies durch eine Flüssigkeitskühlung erreicht. Eine potenzielle Alternative mit erheblichem Gewichtsreduktionspotenzial auf Systemebene besteht darin, die Flüssigkeitskühlung durch einen Zweiphasenkühlkreislauf zu ersetzen. Hierbei wird die latente Verdampfungswärme genutzt, um große Mengen an Wärme von den Brennstoffzellen abzuführen. Darüber hinaus verbessert der hohe Wärmeübergangskoeffizient im Vergleich zur einphasigen Kühlung die Leistung des thermischen Managementsystems. Die Änderung des Strömungsregimes im Brennstoffzellen-Stapel von Flüssigkeits- zu Zweiphasenkühlung erfordert dabei eine spezielle thermische Auslegung der Strömungsfelder.

### Zusammenfassung der Erfindung

Es kann als Aufgabe der Erfindung betrachtet werden, die fluiddynamische Auslegung der Strömungsfelder zu verbessern.

Diese Aufgabe wird gelöst durch die Gegenstände der unabhängigen Ansprüche. Weitere Ausführungsformen ergeben sich aus den abhängigen Ansprüchen sowie aus der folgenden Beschreibung.

Gemäß einem Aspekt umfasst die Bipolarplatte für eine Brennstoffzelle ein Zwei-Phasen-Kühlsystem mit den folgenden Merkmalen: einen Kühlmitteleinlass, einen Kühlmittelauslass und eine Vielzahl von Kühlmittelkanälen. Der Kühlmitteleinlass steht über die Vielzahl von Kühlmittelkanälen mit dem Kühlmittelauslass in Fluidverbindung. Des Weiteren weist mindestens eine Innenfläche von Kühlmitteleinlass, Kühlmittelauslass und mindestens einer der Vielzahl von Kühlmittelkanälen eine Oberflächenbehandlung auf, um den Strömungsverlauf einer Kühlflüssigkeit entlang mindestens einer Innenfläche und/oder einen Phasenübergang der Kühlflüssigkeit zu beeinflussen.

Ein Brennstoffzellensystem mit einer Bipolarplatte im Sinne der Erfindung ist eine technologische Einheit, die aus mehreren Komponenten besteht und zur Umwandlung chemischer Energie in elektrische Energie mittels elektrochemischer Reaktionen dient. Es umfasst in der Regel eine oder mehrere Brennstoffzellen, die als elektrochemische Zellen fungieren und die Hauptkomponente des Systems darstellen. Zusätzlich beinhaltet das System weitere Komponenten wie einen Brennstoffzufuhrmechanismus, einen Oxidationsmittelzufuhrmechanismus, einen Elektrolyt, Elektroden mit Katalysatoren und eine elektrische Verbindung.

Das Brennstoffzellensystem nutzt eine chemische Reaktion zwischen einem Brennstoff und einem Oxidationsmittel, typischerweise Wasserstoff und Sauerstoff, um elektrischen Strom zu erzeugen. Dabei entsteht Wasser neben Wärme und elektrischer Energie als Reaktionsprodukt, wodurch das Brennstoffzellensystem als umweltfreundliche Energiequelle gilt. Die erzeugte elektrische Energie kann dann zur Versorgung von elektrischen Geräten, Fahrzeugen oder zur Stromerzeugung in verschiedenen Anwendungen genutzt werden.

Ein Zwei-Phasen-Kühlsystem im Sinne der Erfindung ist eine Kühllösung, die darauf abzielt, große Wärmemengen effizient abzuführen, indem es den Phasenübergang von Flüssigkeit zu Dampf nutzt. Es wird häufig in Situationen eingesetzt, in denen herkömmliche einphasige Kühlsysteme an ihre Grenzen stoßen und nicht ausreichend Wärmeableitung bieten können oder ein besonders leichtes, insbesondere Gewicht optimiertes Kühlsystem von Nutzen ist.

Bei einem Zwei-Phasen-Kühlsystem wird ein Kühlmittel verwendet, das bei geeigneten Temperaturen und Drücken sowohl in flüssiger als auch in gasförmiger Form existieren kann. Das Kühlmittel nimmt Wärme von der zu kühlenden Quelle auf und verdampft, wodurch es von flüssigem Zustand in einen gasförmigen Zustand übergeht. Der entstehende Dampf nimmt dabei große Mengen an Wärme auf.

Ein Zwei-Phasen-Kühlsystem besteht in der Regel aus einem Verdampfer, in dem das Kühlmittel Wärme aufnimmt und verdampft, und einem Kondensator, in dem der Dampf wieder kondensiert und die Wärme abgibt. Das Kondensat wird dann zurück in den Verdampfer geleitet, um den Kühlkreislauf fortzusetzen.

Ein Kühlmitteleinlass im Sinne der Erfindung ist eine Öffnung oder ein Anschluss in einem Kühlsystem, durch den das Kühlmedium, in diesem Fall das Kühlmittel, in das System eingeführt wird. Der Kühlmitteleinlass ermöglicht den kontrollierten Eintritt der Kühlflüssigkeit in den entsprechenden Bereich oder die Komponenten, die gekühlt werden müssen.

Ein Kühlmittelauslass im Sinne der Erfindung ist eine Öffnung oder ein Anschluss in einem Kühlsystem, durch den das Kühlmedium, in diesem Fall das Kühlmittel, aus dem System abgeleitet wird. Der Kühlmittelauslass ermöglicht den kontrollierten Austritt der erwärmten Kühlflüssigkeit aus dem entsprechenden Bereich oder den Komponenten, um sie abzukühlen und den Wärmeaustausch zu gewährleisten.

Eine Vielzahl von Kühlmittelkanälen im Sinne der Erfindung sind mehrere Kanäle oder Durchgänge in einer Komponente oder Struktur, durch die das Kühlmittel fließt, um Wärme abzuführen. Diese Kühlmittelkanäle dienen dazu, das Kühlmittel effizient über die zu kühlenden Bereiche oder Komponenten zu verteilen und den Wärmeaustausch zu ermöglichen. Durch die Vielzahl der Kühlmittelkanäle wird eine größere Oberfläche für den Wärmeübertragungsprozess geschaffen, was zu einer effektiven Kühlung führt.

Die Oberflächenbehandlung der Innenseite von Kühlmitteleinlass, Kühlmittelauslass, Kühlmittelkanals oder Kombination hiervon bezieht sich auf die gezielte Veränderung oder Bearbeitung der Oberfläche, die mit dem Kühlmittel in Kontakt steht. Diese Behandlung kann verschiedene Verfahren und Techniken umfassen, die darauf abzielen, den Strömungsverlauf des Kühlmittels zu beeinflussen oder den Phasenübergang des Kühlmittels zu verbessern.

Gemäß einer Ausführungsform umfasst mindestens ein Teil der Oberflächenbehandlung das Einbringen einer Makrostruktur, wie beispielsweise Rillen, ein Netz oder Sintern, auf der mindestens einen Innenfläche.

Der Vorteil einer solchen Ausführungsform liegt darin, dass die Makrostruktur auf der Innenfläche der Bipolarplatte eine erhöhte Oberfläche und eine verbesserte Strömungsführung der Kühlflüssigkeit ermöglicht. Durch die Rillen, das Netz oder das Sintern entsteht eine vergrößerte Kontaktfläche zwischen der Kühlflüssigkeit und der Bipolarplatte, wodurch eine effiziente Wärmeübertragung gewährleistet wird. Dies führt zu einer verbesserten Kühlleistung und einem reduzierten Risiko von Hotspots in der Brennstoffzelle. Durch die gezielte Strömungsführung wird zudem eine gleichmäßige Verteilung der Kühlflüssigkeit über die gesamte Innenfläche der Bipolarplatte erreicht, was zu einer verbesserten Kühlung und einer erhöhten Leistungsfähigkeit der Brennstoffzelle führt.

Gemäß einer weiteren Ausführungsform umfasst mindestens ein Teil der Oberflächenbehandlung das Einbringen von porösen Mikro- und/oder Nanopartikeln. Diese porösen Partikel können aus Materialien wie Metallen, Keramiken, Kohlenstoffen, Kunststoffen oder deren Kombinationen ausgewählt sein.

Der Vorteil dieser Ausführungsform besteht darin, dass die porösen Mikro- und/oder Nanopartikel eine erhöhte Oberfläche und eine verbesserte Wärmeübertragungseffizienz bieten. Durch die Einführung dieser porösen Partikel in die Oberflächenstruktur der Bipolarplatte wird die Kontaktfläche zwischen der Kühlflüssigkeit und der Platte erheblich vergrößert. Durch die porösen Partikel kann zusätzlich das Kühlmittel durch Kapillartransport gleichmäßiger verteilt werden. Dies ermöglicht eine effektivere Aufnahme und Abgabe von Wärmeenergie, was zu einer verbesserten Kühlleistung und einer reduzierten thermischen Belastung der Brennstoffzelle führt.

Darüber hinaus können die porösen Mikro- und/oder Nanopartikel auch dazu beitragen, Verunreinigungen oder Schadstoffe in der Kühlflüssigkeit zu filtern oder abzufangen. Dies trägt zur Erhaltung der Betriebsleistung und Lebensdauer der Brennstoffzelle bei, indem potenziell schädliche Partikel aus dem Kühlsystem entfernt werden.

Die Auswahl der Materialien für die porösen Partikel, wie Metalle, Keramiken, Kohlenstoffe oder Kunststoffe, ermöglicht zudem eine Anpassung an spezifische Anforderungen hinsichtlich thermischer Stabilität, Korrosionsbeständigkeit und mechanischer Festigkeit. Dadurch kann die Bipolarplatte mit den porösen Partikeln in einer Vielzahl von Umgebungen und Betriebsbedingungen eingesetzt werden, ohne dass die Leistung beeinträchtigt wird.

Gemäß einer weiteren Ausführungsform beinhaltet mindestens ein Teil der Oberflächenbehandlung das Einbringen von hydrophoben und/oder hydrophilen Schichten. Diese Schichten können aus Metallen, der Borgruppe, Stickstoffen, der Fluorgruppe, Chalkogenen, Halogenen oder deren Kombinationen ausgewählt sein.

Der Vorteil dieser Ausführungsform liegt darin, dass die hydrophoben und/oder hydrophilen Schichten die Kontrolle über die Benetzungseigenschaften der Bipolarplatte ermöglichen. Durch das Einbringen dieser Schichten auf den Innenflächen der Kühlmitteleinlässe, Kühlmittelauslässe und der Kühlmittelkanäle kann der Fluss und die Verteilung der Kühlflüssigkeit präzise gesteuert werden.

Die Verwendung hydrophober Schichten führt dazu, dass die Bipolarplatte wasserabweisend wird. Dies verhindert, dass sich Wasser oder andere flüssige Bestandteile der Kühlflüssigkeit auf der Oberfläche der Platte ansammeln und zu unerwünschten Strömungsblockaden oder Korrosion führen. Durch die Reduzierung der Benetzungseigenschaften können hydrophobe Schichten auch dazu beitragen, dass das Kühlmittel gleichmäßig und effizient durch die Kühlmittelkanäle fließt.

Auf der anderen Seite ermöglichen hydrophile Schichten eine verbesserte Benetzung der Bipolarplatte durch das Kühlmittel. Dies kann zu einer besseren Verteilung der Flüssigkeit entlang der Innenflächen führen, wodurch die Wärmeübertragungseffizienz verbessert wird. Hydrophile Schichten können auch dazu beitragen, die Bildung von Gasblasen in der Kühlflüssigkeit zu reduzieren, was die Kühlleistung weiter verbessert.

Die Auswahl der Materialien für die hydrophoben und/oder hydrophilen Schichten aus Metallen, der Borgruppe, Stickstoffen, der Fluorgruppe, Chalkogenen, Halogenen oder deren Kombinationen ermöglicht eine Anpassung an die spezifischen Anforderungen der Brennstoffzelle und des Kühlsystems. Je nach den betrieblichen Bedingungen und der Art der Kühlflüssigkeit können die Schichten so gewählt werden, dass sie eine optimale Leistung und Stabilität gewährleisten.

Im Idealfall verbessert die Beschichtung auch die elektrische Leitfähigkeit zwischen den Teilplatten einer Bipolarplatte.

Gemäß einer Ausführungsform sind die hydrophoben und/oder hydrophilen Schichten ausgelegt, den Siedeverzug zu verringern. Weiterhin können die hydrophoben und/oder hydrophilen Schichten oder die porösen Schichten so gestaltet sein, dass eine bessere Verteilung des Kühlmittels ermöglicht wird.

Gemäß einer weiteren Ausführungsform sind hydrophobe Schichten im Bereich des Kühlmitteleinlasses vorgesehen, während im Bereich der Vielzahl von Kühlmittelkanälen poröse Mikro- und/oder Nanopartikel verwendet werden.

Der Vorteil dieser Ausführungsform liegt darin, dass die spezifische Anwendung von hydrophoben Schichten im Bereich des Kühlmitteleinlasses und porösen Mikro- und/oder Nanopartikeln im Bereich der Kühlmittelkanäle zu unterschiedlichen Effekten führt, die jeweils von großem Nutzen sind.

Durch die Verwendung von hydrophoben Schichten im Bereich des Kühlmitteleinlasses wird eine Abstoßung der Kühlflüssigkeit von der Oberfläche der Bipolarplatte erreicht. Dadurch wird verhindert, dass sich die Flüssigkeit an der Einlassstelle ansammelt und den Fluss blockiert. Die hydrophoben Schichten sorgen dafür, dass das Kühlmittel schnell und gleichmäßig über die Oberfläche der Bipolarplatte fließt, wodurch ein effizienter Wärmeaustausch gewährleistet wird.

Im Bereich der Vielzahl von Kühlmittelkanälen werden poröse Mikro- und/oder Nanopartikel eingesetzt. Diese Partikel dienen dazu, die Oberfläche der Kühlmittelkanäle zu vergrößern und die Benetzungseigenschaften zu verbessern. Dadurch wird eine bessere Verteilung der Kühlflüssigkeit entlang der Kanäle erreicht, was zu einer effizienteren Kühlung der Bipolarplatte führt. Die porösen Partikel fördern den turbulenten Fluss der Kühlflüssigkeit und können auch zur Entfernung von Gasblasen beitragen, was die Leistung und Zuverlässigkeit des Kühlsystems verbessert.

Durch die gezielte Verwendung von hydrophoben Schichten im Kühlmitteleinlassbereich und porösen Partikeln in den Kühlmittelkanälen wird also eine optimale Kombination von Effekten erzielt. Dies führt zu einer verbesserten Wärmeableitung, einer effizienteren Kühlung und einer insgesamt besseren Leistung der Brennstoffzelle.

Gemäß einer weiteren Ausführungsform kann das Kühlmittel in der Bipolarplatte Methanol und/oder Ethanol umfassen.

Ein Vorteil besteht darin, dass Methanol und Ethanol als Kühlflüssigkeiten eine hohe Wärmeleitfähigkeit aufweisen. Dies ermöglicht eine effiziente Ableitung der Wärme von der Bipolarplatte, was zu einer besseren Kühlung und einer geringeren Betriebstemperatur führt. Eine niedrigere Betriebstemperatur kann die Leistung und Lebensdauer der Brennstoffzelle verbessern.

Ein weiterer Vorteil von Methanol und Ethanol liegt in ihrer guten Fließfähigkeit und geringen Viskosität. Diese Eigenschaften ermöglichen einen reibungslosen Durchfluss der Kühlflüssigkeit durch die Kühlmittelkanäle der Bipolarplatte. Ein effizienter Fluss gewährleistet eine gleichmäßige Verteilung der Kühlflüssigkeit entlang der Oberfläche der Bipolarplatte und eine effektive Wärmeableitung.

Gemäß einer weiteren Ausführungsform kann das Kühlmittel in der Bipolarplatte gelöstes Inertgas wie beispielsweise Stickstoff umfassen. Hierdurch können sich beispielsweise in den Poren der porösen Mikro- und/oder Nanopartikeln Siedekeime bilden, wodurch der Siedeverzug vermindert wird.

Gemäß einem anderen Aspekt umfasst das Brennstoffzellensystem mindestens eine Brennstoffzelle, ein Zwei-Phasen-Kühlsystem und eine Bipolarplatte. Die Bipolarplatte ist so konfiguriert, dass mindestens eine Innenfläche von Kühlmitteleinlass, Kühlmittelauslass und mindestens einem der Vielzahl von Kühlmittelkanälen eine Oberflächenbehandlung aufweist, um einen Strömungsverlauf einer Kühlflüssigkeit entlang der mindestens einen Innenfläche und/oder einen Phasenübergang der Kühlflüssigkeit zu beeinflussen.

Durch die Verwendung einer Bipolarplatte mit einer Oberflächenbehandlung entlang der Innenflächen von Kühlmitteleinlass, Kühlmittelauslass und Kühlmittelkanälen werden sowohl der Strömungsverlauf der Kühlflüssigkeit als auch der Phasenübergang der Flüssigkeit beeinflusst.

Ein Vorteil besteht darin, dass der Wärmeübergang zwischen der Bipolarplatte und der Kühlflüssigkeit verbessert wird. Die optimierte Strömung der Kühlflüssigkeit entlang der Innenflächen ermöglicht einen effizienten Abtransport der Wärme, was zu einer effektiven Kühlung der Brennstoffzelle führt. Dadurch wird die Betriebstemperatur der Brennstoffzelle stabilisiert und ihre Leistungsfähigkeit optimiert.

Darüber hinaus trägt die gezielte Beeinflussung des Strömungsverlaufs und des Phasenübergangs dazu bei, eine gleichmäßige Verteilung der Kühlflüssigkeit in der Bipolarplatte zu erreichen. Dies verhindert die Bildung von Hot-Spots, also Bereichen mit erhöhter Temperatur, und gewährleistet eine homogene Kühlung über die gesamte Fläche der Brennstoffzelle. Ein gleichmäßiger Betrieb der Brennstoffzelle wird dadurch sichergestellt, was zu einer verbesserten Leistung und einer längeren Lebensdauer beiträgt.

Durch das Bilden von Gasblasen durch die Oberflächenbehandlung einer Innenfläche wird ferner einem Siedeverzug des Kühlmittels vorgebeugt.

Gemäß einem weiteren Aspekt handelt es sich bei dem Luftfahrzeug um ein Luftfahrzeug mit einem beschriebenen Brennstoffzellensystem. Das Brennstoffzellensystem kann dabei ausdrücklich auch in anderen Systemen Anwendung finden, wie Kraftfahrzeuge, Wasserfahrzeuge, Raumfahrt, oder sonstige mit einer Brennstoffzelle angetriebenen Einheiten.

Das Luftfahrzeug mit diesem Brennstoffzellensystem bietet den Vorteil einer umweltfreundlichen und effizienten Energiequelle. Brennstoffzellensysteme haben ein geringes Emissionsprofil und können den Betrieb von Luftfahrzeugen nachhaltiger gestalten. Die Integration der beschriebenen Bipolarplatte mit der Oberflächenbehandlung verstärkt die Leistungsfähigkeit des Kühlsystems und trägt zur Zuverlässigkeit und Effizienz des Luftfahrzeugs bei, was letztendlich zu einem umweltfreundlicheren und fortschrittlicheren Luftverkehr beiträgt.

Gemäß einer weiteren Ausführungsform weist die Bipolarplatte einen Vorwärm-Bereich auf, der von dem Kühlmitteleinlass mit dem Kühlmittelauslass über eine Vielzahl von Kühlmittelkanälen verbunden ist. Im Vorwärm-Bereich befindet sich mindestens ein Vorwärm-Kanal, der dazu dient, die Strömungsrichtung des Kühlmittels vor dem Eintritt in die Vielzahl von Kühlmittelkanälen umzulenken. Dadurch wird ein Temperaturgradient entlang des Vorwärm-Kanals reduziert. In einer spezifischen Ausführungsform weist der Vorwärm-Kanal im Vorwärm-Bereich mindestens einen Bereich auf, in dem das Kühlmittel entgegen der üblichen Fließrichtung strömt.

Der Vorteil besteht dabei darin, dass durch den Vorwärm-Kanal im Vorwärm-Bereich die Strömungsrichtung des Kühlmittels umgelenkt und hierdurch ein Temperaturgradient entlang des Kanals reduziert wird.

Gemäß einer weiteren Ausführungsform weist mindestens einer der Kühlmittelkanäle einen veränderlichen Querschnitt auf, der dazu dient, den Druckgradienten eines Kühlmittels entlang der Kanäle und/oder den Rückfluss des Kühlmittels zu reduzieren.

Der Vorteil dieser Bipolarplatte mit einem effizienten Zwei-Phasen-Kühlsystem liegt darin, dass sie eine verbesserte Kühlleistung bietet. Durch den veränderlichen Querschnitt mindestens eines, insbesondere aller Kühlmittelkanäle wird der Druckgradient des Kühlmittels entlang der Kanäle reduziert. Dies ermöglicht eine gleichmäßigere Verteilung des Kühlmediums und verhindert einen unerwünschten Rückfluss des Kühlmittels.

Ausführungsformen sind Kühlmittelkanäle mit einem in einem Vorwärm-Bereich befindlichen Vorwärm-Kanal und Kühlmittelkanäle mit einem veränderlichen Querschnitt. Diese sind vorteilhaft für die Kühlung in einem Zwei-Phasenkühlsystem, da sie beispielsweise das Bilden von Siedeinitiatoren des Kühlmittels begünstigen.

### Kurze Beschreibung der Figuren

Nachfolgend wird anhand der beigefügten Zeichnungen näher auf Ausführungsbeispiele der Erfindung eingegangen. Die Darstellungen sind schematisch und nicht maßstabsgetreu. Gleiche Bezugszeichen beziehen sich auf gleiche oder ähnliche Elemente. Es zeigen:
- **Fig. 1**: eine Bipolarplatte;
- **Fig. 2**: verschiedene Ausführungsformen der Oberflächenbehandlung der Innenseite eines Kühlmittelkanals;
- **Fig. 3**: ein Brennstoffzellensystem;
- **Fig. 4**: ein Luftfahrzeug mit einem Brennstoffzellensystem.

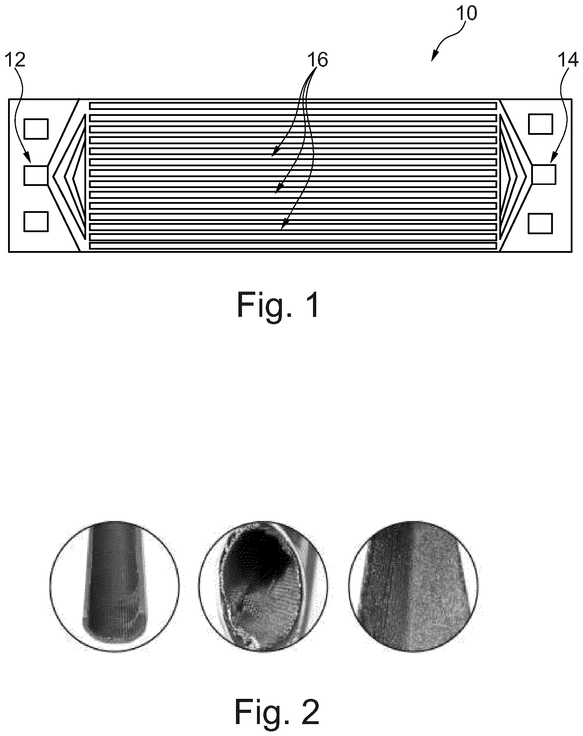

Detaillierte Beschreibung von Ausführungsbeispielen Figur 1 zeigt eine Bipolarplatte 10 für eine Brennstoffzelle mit einem Zwei-Phasen-Kühlsystem. Diese Bipolarplatte weist einen Kühlmitteleinlass 12, einen Kühlmittelauslass 14 und eine Vielzahl von Kühlmittelkanälen 16 auf. Der Kühlmitteleinlass 12 steht über die Vielzahl von Kühlmittelkanälen 16 mit dem Kühlmittelauslass 14 in Fluidverbindung. Es ist zu beachten, dass mindestens eine Innenfläche des Kühlmitteleinlasses 12, des Kühlmittelauslasses 14 und mindestens eines der Kühlmittelkanäle 16 eine Oberflächenbehandlung aufweist, um den Strömungsverlauf der Kühlflüssigkeit entlang der mindestens einen Innenfläche und/oder den Phasenübergang der Kühlflüssigkeit zu beeinflussen.

Figur 2 zeigt, dass bei der Oberflächenbehandlung der Innenseite der Kühlmittelkanäle verschiedene Möglichkeiten zur Verfügung stehen. Eine Option ist die Verwendung von gerillten Oberflächen. Insbesondere in Bezug auf die Schwerkraft zeigt sich, dass diese Methode ausreichend funktioniert.

Eine andere gängige Möglichkeit besteht in der Verwendung von Drahtgeflechten. Diese Technik bietet ebenfalls eine gute Leistung. Besonders hervorzuheben ist, dass Drahtgeflechte gut gegen die Wirkung der Schwerkraft arbeiten und somit effektiv sind.

Eine dritte Möglichkeit der Oberflächenbehandlung ist das Sintern. Gesinterte Oberflächen sind besonders effektiv, wenn es darum geht, der Schwerkraft entgegenzuwirken, und erzielen in dieser Hinsicht die besten Ergebnisse

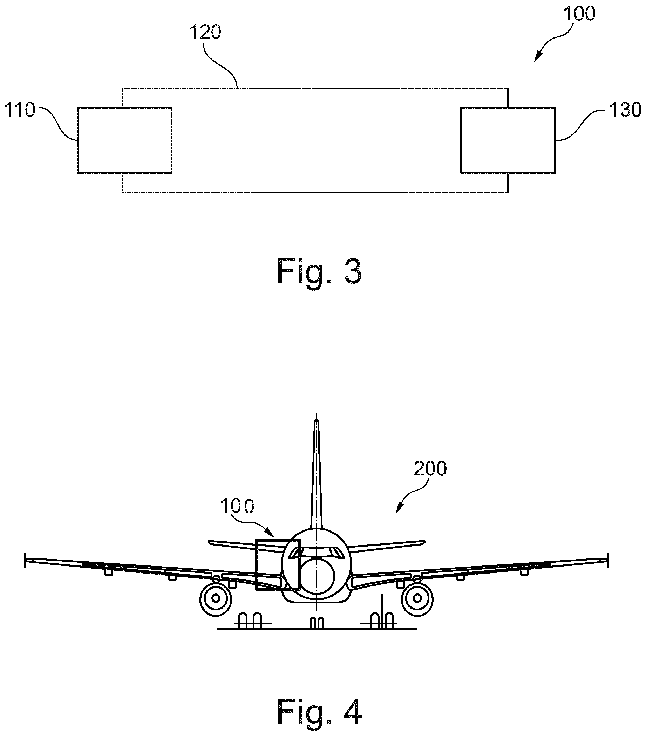

Figur 3 zeigt ein Brennstoffzellensystem 100 bestehend aus mehreren Komponenten, darunter einer Brennstoffzelle 110, welche auch als Brennstoffzellen-Stack ausgestaltet sein kann und ein Zwei-Phasen-Kühlsystem 120 sowie einen Wärmetauscher 130.

Die Brennstoffzelle 110 umfasst dabei eine Vielzahl von Bipolarplatten 10 (nicht gezeigt), die eine Vielzahl von Kühlmittelkanälen 16 aufweist. Die Oberflächenbehandlung einer Innenfläche von Kühlmitteleinlass 12, Kühlmittelauslass 14 und mindestens einem der Vielzahl von Kühlmittelkanälen 16 beeinflusst dabei den Strömungsverlauf des Kühlmittels entlang der mindestens einen Innenfläche und/oder einen Phasenübergang der Kühlflüssigkeit positiv.

Figur 4 zeigt ein Luftfahrzeug 200 mit einem Brennstoffzellensystem 100 mit einer Brennstoffzelle 100 und einer darin enthaltenen Bipolarplatte 10.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: Bipolarplatte
- 12: Kühlmitteleinlass
- 14: Kühlmittelauslass
- 16: Vielzahl von Kühlmittelkanälen
- 100: Brennstoffzellensystem
- 110: Brennstoffzelle
- 120: Zwei-Phasen-Kühlsystem
- 130: Wärmetauscher
- 200: Luftfahrzeug

## Patentansprüche

1. Bipolarplatte (10) für eine Brennstoffzelle mit einem Zwei-Phasen-Kühlsystem, aufweisend:
einen Kühlmitteleinlass (12),
einen Kühlmittelauslass (14),
eine Vielzahl von Kühlmittelkanälen (16),
wobei der Kühlmitteleinlass (12) über die Vielzahl von Kühlmittelkanälen (16) mit dem Kühlmittelauslass (14) in Fluidverbindung steht,
wobei mindestens eine Innenfläche von Kühlmitteleinlass (12), Kühlmittelauslass (14) und mindestens einem der Vielzahl von Kühlmittelkanälen (16) eine Oberflächenbehandlung aufweist um einen Strömungsverlauf einer Kühlflüssigkeit entlang der mindestens einen Innenfläche und/oder einen Phasenübergang der Kühlflüssigkeit zu beeinflussen.

2. Bipolarplatte (10) nach Anspruch 1,
wobei mindestens ein Teil der Oberflächenbehandlung das Einbringen einer Makrostruktur, vorzugsweise ausgewählt aus der Gruppe Rillen, Netz, Sintern auf der mindestens einen Innenfläche umfasst.

3. Bipolarplatte (10) nach einem der vorhergehenden Ansprüche,
wobei mindestens ein Teil der Oberflächenbehandlung das Einbringen von porösen Mikro- und/oder Nanopartikeln umfasst.

4. Bipolarplatte (10) nach Anspruch 3,
wobei die porösen Mikro- und/oder Nanopartikeln ausgewählt sind aus der Gruppe Metalle, Keramiken, Kohlenstoffe, Kunststoffe oder Kombinationen hiervon.

5. Bipolarplatte (10) nach Anspruch 3 oder 4, wobei die porösen Mikro- und/oder Nanopartikeln eingerichtet sind, einen Siedeverzug der Kühlflüssigkeit herabzusetzen.

6. Bipolarplatte (10) nach einem der vorhergehenden Ansprüche,
wobei mindestens ein Teil der Oberflächenbehandlung das Einbringen von hydrophoben und/oder hydrophilen Schichten umfasst.

7. Bipolarplatte (10) nach Anspruch 6,
wobei die hydrophoben und/oder hydrophilen Schichten ausgewählt sind aus der Gruppe der Metalle, der Borgruppe, der Stickstoffe, Fluorgruppe, Chalkogene und Halogene, oder Kombinationen hiervon.

8. Bipolarplatte (10) nach Anspruch 6 oder 7, wobei die hydrophoben und/oder hydrophilen Schichten und/oder porösen Schichten eingerichtet sind, einen Siedeverzug der Kühlflüssigkeit herabzusetzen.

9. Bipolarplatte (10) nach einem der Ansprüche 3 bis 8, wobei die hydrophoben Schichten im Bereich des Kühlmitteleinlass (12) vorgesehen sind und/oder im Bereich des mindestens einem der Vielzahl von Kühlmittelkanälen (16) poröse Mikro- und/oder Nanopartikel vorgesehen sind.

10. Bipolarplatte (10) nach einem der vorhergehenden Ansprüche, wobei das Kühlmittel Methanol und/oder Ethanol umfasst.

11. Bipolarplatte (10) nach einem der vorhergehenden Ansprüche, wobei das Kühlmittel gelöstes Inertgas umfasst.

12. Brennstoffzellensystem (100), aufweisend:
mindestens eine Brennstoffzelle (110),
ein Zwei-Phasen-Kühlsystem (120),
einen Wärmetauscher (130),
eine Bipolarplatte (10) nach einem der Ansprüche 1 bis 11,
wobei mindestens eine Innenfläche von Kühlmitteleinlass (12), Kühlmittelauslass (14) und mindestens einem der Vielzahl von Kühlmittelkanälen (16) eine Oberflächenbehandlung aufweist um einen Strömungsverlauf einer Kühlflüssigkeit entlang der mindestens einen Innenfläche und/oder einen Phasenübergang der Kühlflüssigkeit zu beeinflussen.

13. Luftfahrzeug (200) mit einem Brennstoffzellensystem (100) nach Anspruch 12.
